# EUROPEAN PATENT APPLICATION

(11) **EP 3 797 902 A1**
(43) Date of publication of application: **31.03.2021**
(21) Application number: 19020537.7
(22) Date of filing: 25.09.2019
(51) Int. Cl.: B22F 3/105, B29C 64/153, B29C 64/371, B33Y 10/00, B33Y 30/00, B33Y 50/02

(54) **METHOD AND SYSTEM FOR ATMOSPHERE IN ADDITIVE MANUFACTURE**

(71) Applicant: Linde GmbH, 82049 Pullach (DE)
(72) Inventor: Feng, Edward, 85778 Heimhausen (DE)
(74) Representative: Gellner, Bernd

(57) **Abstract**

According to an aspect of the invention for which protection is sought, there is provided an apparatus for controlling a gas environment in an manufacturing space during an additive manufacturing process, the apparatus comprising:
a device for feeding a process gas to the manufacturing space;
a reactive gas sensor for detecting a concentration of a reactive gas within the manufacturing space;
an adsorbent portion arranged to adsorb the reactive gas from a flow of gas through the adsorbent portion;
a pump arranged to cause gas from the manufacturing space to flow through the adsorbent portion and subsequently return to the manufacturing space; and
a control unit arranged to receive signals from the reactive gas sensor and to control the operation of the pump,
wherein the control unit is configured to activate the pump if the reactive gas sensor detects a reactive gas concentration greater than a predetermined threshold value.

## Description

The present invention relates to an apparatus for additive manufacturing and a method for controlling a gas environment in an additive manufacturing space.

The main differences between processes for additive manufacturing (AM) are in the way layers are deposited to create parts and in the materials that are used. Some methods melt or soften the material to produce the layers, for example selective laser melting (SLM) or direct metal laser sintering (DMLS), selective laser sintering (SLS), fused deposition modeling (FDM), or fused filament fabrication (FFF), while others cure liquid materials using different sophisticated technologies.

Selective laser sintering (SLS) is an additive manufacturing (AM) technique that uses a laser as the power source to sinter powdered material, aiming the laser automatically at points in space defined by a 3D model, binding the material together to create a solid structure. It is similar to direct metal laser sintering (DMLS). Both are instantiations of the same concept but differ in technical details. Selective laser melting (SLM) uses a comparable concept, but in SLM the material is fully melted rather than sintered, allowing different properties (crystal structure, porosity, and so on). SLS involves the use of a high power laser (for example, a carbon dioxide laser) to fuse small particles of plastic, metal, ceramic, or glass powders into a mass that has a desired three-dimensional shape. The laser selectively fuses powdered material by scanning cross-sections generated from a 3-D digital description of the part (for example from a CAD file or scan data) on the surface of a powder bed. After each cross-section is scanned, the powder bed is lowered by one layer thickness, a new layer of material is applied on top, and the process is repeated until the part is completed.

Selective laser melting (SLM) is a particular rapid prototyping, 3D printing, or Additive Manufacturing (AM) technique designed to use a high power-density laser to melt and fuse metallic powders together. In many SLM is considered to be a subcategory of Selective Laser Sintering (SLS). The SLM process has the ability to fully melt the metal material into a solid 3D-dimensional part unlike SLS. With selective laser melting, thin layers of atomized fine metal powder are evenly distributed using a coating mechanism onto a substrate plate, usually metal, that is fastened to an indexing table that moves in the vertical (Z) axis. This takes place inside a chamber containing a tightly controlled atmosphere of inert gas, either argon or nitrogen at oxygen levels below 500 parts per million. Once each layer has been distributed, each 2D slice of the part geometry is fused by selectively melting the powder. This is accomplished with a high-power laser beam, usually an ytterbium fiber laser with hundreds of watts. The laser beam is directed in the X and Y directions with two high frequency scanning mirrors. The laser energy is intense enough to permit full melting (welding) of the particles to form solid metal. The process is repeated layer after layer until the part is complete.

Electron-beam additive manufacturing or electron-beam melting (EBM) is a type of additive manufacturing, or 3D printing, for metal parts. The raw material (metal powder) is placed under a vacuum and fused together from heating by an electron beam. This technique is distinct from selective laser sintering as the raw material fuses having completely melted. Metal powders can be consolidated into a solid mass using an electron beam as the heat source. Parts are manufactured by melting metal powder, layer by layer, with an electron beam in a high vacuum. This powder bed method produces fully dense metal parts directly from metal powder with characteristics of the target material. The EBM machine reads data from a 3D CAD model and lays down successive layers of powdered material. These layers are melted together utilizing a computer-controlled electron beam. In this way it builds up the parts. The process takes place under vacuum, which makes it suited to manufacture parts in reactive materials with a high affinity for oxygen, e.g. titanium. The process is known to operate at higher temperatures (up to 1000 °C), which can lead to differences in phase formation though solidification and solid-state phase transformation.

Selective heat sintering (SHS) is a type of additive manufacturing process. It works by using a thermal print head to apply heat to layers of powdered thermoplastic. When a layer is finished, the powder bed moves down, and an automated roller adds a new layer of material which is sintered to form the next cross-section of the model. SHS is best for manufacturing inexpensive prototypes for concept evaluation, fit/form and functional testing. SHS is a Plastics additive manufacturing technique similar to selective laser sintering (SLS), the main difference being that SHS employs a less intense thermal print head instead of a laser, thereby making it a cheaper solution, and able to be scaled down to desktop sizes.

Direct metal laser sintering (DMLS) is an additive manufacturing metal fabrication technology, occasionally referred to as selective laser sintering (SLS) or selective laser melting (SLM), that generates metal prototypes and tools directly from computer aided design (CAD) data. It is unique from SLS or SLM because the process uses a laser to selectively fuse a fine metal powder. DMLS uses a variety of alloys, allowing prototypes to be functional hardware made out of the same material as production components. Since the components are built layer by layer, it is possible to design organic geometries, internal features and challenging passages that could not be cast or otherwise machined. DMLS produces strong, durable metal parts that work well as both functional prototypes or end-use production parts. The DMLS process begins with a 3D CAD model whereby a .stl file is created and sent to the machine's computer program. The DMLS machine uses a high-powered 200 watt Yb-fiber optic laser. Inside the build chamber area, there is a material dispensing platform and a built platform along with a recoater blade used to move new powder over the built platform. The technology fuses metal powder into a solid part by melting it locally using the focused laser beam. Parts are built up additively layer by layer, typically using layers 20 micrometers thick.

In general additive manufacturing is a manufacturing technology that includes a methodology whereby a heat source melts a feedstock of material which is deposited onto a substrate. Computer control of the movement of the heat source, and the source of the feedstock, makes it possible to build complex components. In additive manufacturing the processing is not limited to the above-mentioned methods in which metal powders are processed but composites or polymers are processed. The heat source can include (but is not limited to) the already mentioned laser beam, an arc, or other plasma-based heat sources.

Several of the additive manufacturing (AM) processes mentioned above may be performed in a controlled gas atmosphere.

It is an object of the present invention to provide an apparatus and a method for controlling a gas environment in an manufacturing space during an additive manufacturing process which is effective.

In particular, it is an object of the invention to provide an apparatus and a method in which the amount of process gas used during an additive manufacturing process is reduced.

According to an aspect of the invention for which protection is sought, there is provided an apparatus for controlling a gas environment in an manufacturing space during an additive manufacturing process, the apparatus comprising:
a device for feeding a process gas to the manufacturing space;
a reactive gas sensor for detecting a concentration of a reactive gas within the manufacturing space;
an adsorbent portion arranged to adsorb the reactive gas from a flow of gas through the adsorbent portion;
a pump arranged to cause gas from the manufacturing space to flow through the adsorbent portion and subsequently return to the manufacturing space; and
a control unit arranged to receive signals from the reactive gas sensor and to control the operation of the pump,
wherein the control unit is configured to activate the pump if the reactive gas sensor detects a reactive gas concentration greater than a predetermined threshold value.

The reactive gas may be oxygen and the reactive gas sensor may be an oxygen sensor. Alternatively or in addition, the reactive gas sensor may be a nitrogen sensor or a moisture sensor.

Advantageously, this allows the apparatus to reduce the reactive gas concentration within the manufacturing space, without the need to introduce more of the process gas into the manufacturing space. This may reduce the cost of performing an additive manufacturing method, as the process gas may be expensive. For example, the process gas may comprise Argon.

In an embodiment, the adsorbent portion comprises a molecular sieve arranged to adsorb reactive gas from a flow of gas through the molecular sieve.

In an embodiment the adsorbent portion is a first adsorbent portion, and the apparatus further comprises a second adsorbent portion and a valve means arranged to selectively direct a gas flow from the manufacturing space to one of the first and second adsorbent portions. Advantageously, this allows the second adsorbent portion to be used to remove the reactive gas from the gas flow during regeneration of the first adsorbent portion.

Optionally, the control means is arranged to control the valve means. Further optionally, the control means is operable to control the valve means to divert the gas flow from the first adsorbent portion to the second adsorbent portion in response to a determination that the amount of the reactive gas adsorbed on the first adsorbent portion exceeds a threshold value. The determination may be indicative of a need to regenerate the first adsorbent section.

According to another aspect of the invention for which protection is sought, there is provided an apparatus for additive manufacture comprising an apparatus as described above, and further comprising:
a delivery system comprising a storage unit for metal feed material and an application device for applying the metal feed material onto a built platform;
a heat source which is a device for generating a plasma or an arc or laser radiation for melting the metal feed material; and a
production unit for additive manufacturing comprising:
   a housing with a wall;
   a built platform disposed inside the wall of the housing, wherein the wall of the housing and the built platform define a manufacturing space.

The feed material may be a metal powder. Accordingly, the additive manufacture (AM) method may be selective laser melting (SLM), or another appropriate AM technique in which a powder is melted. The feed material is a powder of titanium or a titanium alloy.

Optionally, the feed material comprises metal wire. In this case, the additive manufacture method may be wire arc additive manufacture (WAAM), or another appropriate technique in which a metal wire is melted.

According to another aspect of the invention for which protection is sought, there is provided a method for controlling a gas environment in an manufacturing space during an additive manufacturing process comprising the following steps:
supplying a process gas to the manufacturing space;
detecting a concentration of a reactive gas in the manufacturing space, and determining whether or not the reactive gas concentration exceeds a predetermined threshold value; and
if the detected reactive gas concentration exceeds the threshold value, controlling a pump to cause gas from the build environment to flow through an adsorbent portion arranged to remove the reactive gas by adsorption.

Optionally, the reactive gas may comprise oxygen. Alternatively or in addition, the reactive gas may comprise nitrogen or moisture (i.e. gaseous water).

Optionally, the process gas comprises Argon.

In an embodiment, the additive manufacturing process comprises a selective laser melting (SLM) process or a wire arc additive manufacture (WAAM) process.

Optionally, the adsorbent portion comprises a molecular sieve arranged to adsorb the reactive gas from a flow of gas through the molecular sieve.

The invention is explained below with the aid of an embodiment shown in the drawings. The drawing shows in:
- Figure 1: a rough schematic view of the components within a housing of a device for additive manufacturing according to an embodiment of the present invention;
- Figure 2: a rough schematic view of an apparatus for additive manufacture in an embodiment of the present invention;
- Figure 3: a flow chart illustrating a method of manufacturing a component in an embodiment of the present invention; and
- Figure 4: a flow chart illustrating a method of regenerating molecular sieves in an embodiment of the present invention.

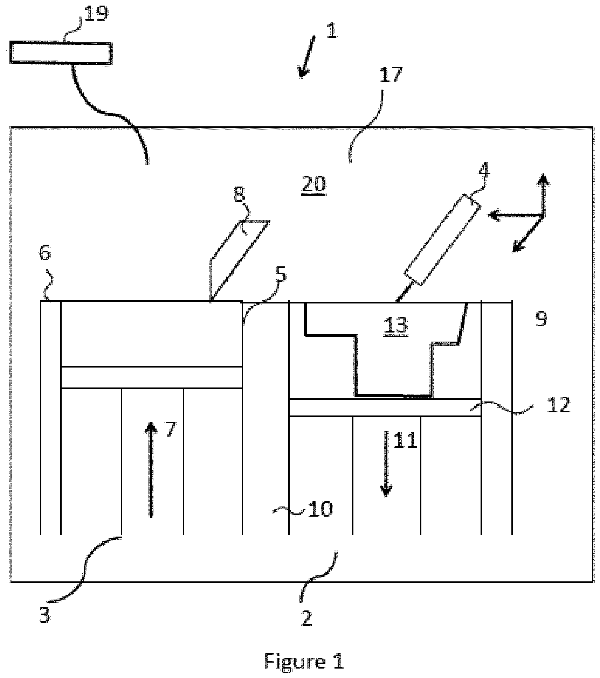

Hereinafter an apparatus for additive manufacturing 1 of a system for generating a three-dimensional workpiece according to the present invention is explained in detail (Figure 1).

The apparatus 1 comprises a production cylinder 2, a delivery cylinder 3 and a heat source 4.

The heat source 4 according to a preferred embodiment comprises a laser and a corresponding scanner system for melting metal powder (not shown).

The delivery cylinder 3 comprises a housing 5 with a wall 6 wherein a powder delivery piston 7 is disposed inside the housing 5.

A powder applying device 8, for example a roller, is provided for pushing a metal powder from the delivery cylinder 3 to the production cylinder 2.

The production cylinder 2 comprises a housing 9 with a wall 10.

A lift table 11 with a built platform 12 is disposed inside the wall 10 of the housing 9. The lift table 11 and the corresponding built platform 12 embody a fabrication piston.

The wall 10 of the housing 9 and the built platform 12 of the lift table 11 of the production cylinder 2 define a built space 13.

The built space 13 houses the fabrication powder bed and therefore the object being fabricated.

The built platform 12 can be an integral part of the lift table 11 of the fabrication piston or a separate part connected to the lift table 11.

Furthermore, a processing chamber 17 is provided surrounding the production cylinder 2, the delivery cylinder 3 and the heat source 4.

The manufacturing space according to the present invention is therefore the build space 13 of the production cylinder 2 defined by the 10 wall of the housing 9 of the production cylinder 2 and the lift table 11 with the built platform 12 disposed inside the wall 10 of the housing 9, and/or the manufacturing space is the room within the processing chamber 17.

Although figure 1 shows a manufacturing space containing an apparatus for manufacturing a component by a selective laser melting (SLM) or selective laser sintering (SLS) process, it will be understood that the present invention is also applicable to other additive manufacture (AM) techniques in which a metal feed material is melted or sintered to form the component. In some embodiments, the feed material may be a metal wire rather than a metal powder, and the component may be made by a wire arc additive manufacturing (WAAM) process. It will be understood that the present invention can be applicable in any additive manufacturing apparatus that is required to provide a controlled atmosphere in which feed material is melted or sintered and a protective gas is required to avoid oxidation or other undesirable reactions.

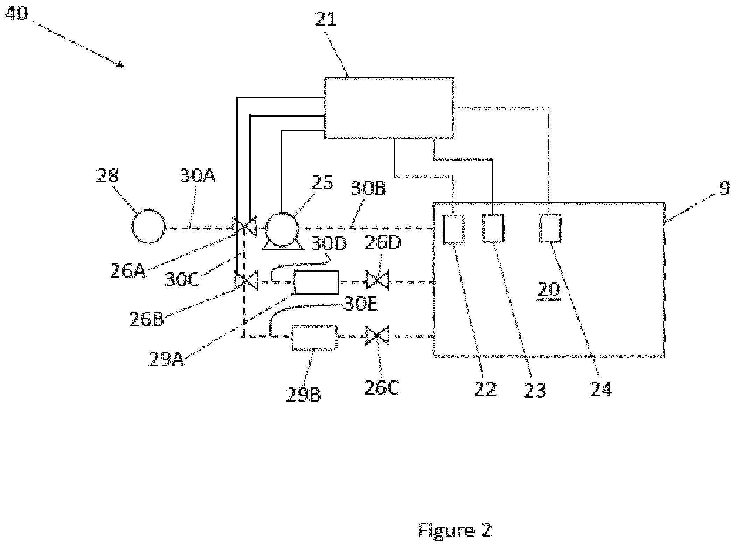

Figure 2 shows a schematic representation of an apparatus 40 for additive manufacture, with particular reference to the components for controlling the gas atmosphere within the manufacturing space 20 and ensuring that the concentration of impurities within the process gas remain within their specified limits.

In figure 2, dashed lines are used to indicate conduits through which gas may flow, and solid lines are used to indicate connections along which control signals may be transmitted.

The apparatus 40 includes a housing 9 which defines a manufacturing space 20. The components for additive manufacture shown in figure 1 may be provided within the manufacturing space 20.

In addition to the components shown in figure 1, three sensors 22, 23, 24 are provided within the manufacturing space 20.

Sensor 22 is an oxygen sensor, which is capable of detecting very low concentrations of oxygen, preferably concentrations of 10 parts per million (ppm) or lower.

Sensor 23 is a nitrogen sensor, which is capable of detecting very low concentrations of nitrogen, preferably concentrations of 10 ppm or lower.

Sensor 24 is a pressure sensor.

All of the sensors 22, 23, 24 are arranged to communicate with a control unit 21. Accordingly, the control unit 21 receives signals indicative of the concentration of oxygen and nitrogen within the manufacturing space 20, and a signal indicative of the pressure within the manufacturing space 20.

The apparatus further comprises a supply of process gas 28. In the illustrated embodiment, the process gas is argon. However, it will be understood that other process gases may be used in different embodiments.

A system of conduits 30A-E and valves 26A-D are also provided to connect the gas supply 28 to the manufacturing space 20, and to allow recirculation and conditioning of the gas within the manufacturing space.

Conduit 30A connects the gas supply 28 to the first valve 26A. The first valve is a two-way valve 26A is arranged to selectively make any one of two possible connections, as listed below:
I. connect the first conduit 30A to the second conduit 30B; or
II. connect the second conduit 30B to the third conduit 30C.

The second valve 26B is a three-way valve, and is arranged to make any one of the three possible connections listed below:
I. connect the third conduit 30C to the fourth conduit 30D;
II. connect the third conduit 30C to the fifth conduit 30E; or
III. connect the third conduit 30C to an exhaust conduit (not shown).

The third valve 26C is also a two-way valve. It is arranged to make any one of the two possible connections listed below:
I. connect the fifth conduit 30E to the inlet of the manufacturing space; or
II. connect the fifth conduit 30E to an exhaust conduit (not shown).

The fourth valve 26D is also a two-way valve. It is arranged to make any one of the two possible connections listed below:
I. connect the fourth conduit 30D to the inlet of the manufacturing space; or
II. connect the fourth conduit 30D to an exhaust conduit (not shown).

As can be seen in figure 2, the second conduit 30B contains the pump 25, and the fourth and fifth conduits 30D, 30E each contain a respective molecular sieve 29A, 29B.

The molecular sieves comprise porous materials that are arranged to remove oxygen from a flow of gas through the molecular sieve by adsorption. For example, the molecular sieve may comprise a modified carbon molecular sieve, for example a micro-pore modified carbon molecular sieve.

Both of the molecular sieves 29A, 29B are operable to adsorb a finite amount of oxygen onto the surfaces thereof before their performance as an adsorbent degrades. It is therefore beneficial to provide two separate molecular sieves 29A, 29B, so that one of the molecular sieves can be regenerated whilst the other is in use. Each of the molecular sieves 29A, 29B may be provided with a heating element (not shown). The heating elements may heat the molecular sieve to cause regeneration (i.e. removal of the adsorbed oxygen from the surfaces of the molecular sieve). The process of regenerating the molecular sieves will be described in more detail below.

The pump 25 is operable to pump gas through conduit 30B in either direction.

All of the valves 26A-D are controlled by the control unit 21. The pump 25 is also controlled by the control unit 21.

The control unit 21 may be operable to receive a specification of the required gas atmosphere within the manufacturing space 20 via a user interface (not shown). Alternatively, a predetermined specification may be stored in a memory of the control unit 21. In either case, the specification will include at least an upper limit for the concentration of oxygen present in the manufacturing space 20. The specification may also include an upper limit for the nitrogen concentration, and/or a required pressure range.

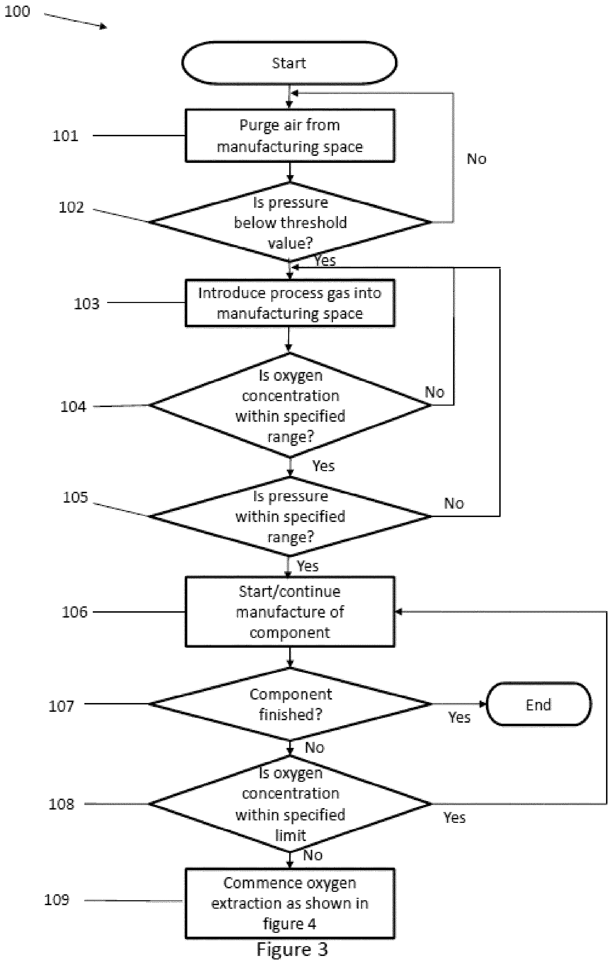

The operation of the control unit to establish and maintain a specified atmosphere within the manufacturing space will be described in more detail below, with respect to figure 3. Figure 3 shows a method 100 which is implemented by the control unit 21.

The atmosphere within the manufacturing space 20 may initially comprise ambient air at ambient pressure. In step 101, The controller is arranged to first purge the ambient air from the manufacturing space. This is achieved by setting the first valve 26A to connect the second conduit 30B to the third conduits 30C (i.e. setting the first valve to position III), and setting the second valve 26B to connect the third conduit 30C to an exhaust conduit (i.e. setting the second valve to position III). The pump 25 is then actuated to pump gas out of the manufacturing space.

Operation of the pump to remove gas from the manufacturing space is continued until the pressure sensor 24 indicates that the pressure within the manufacturing space has fallen below a present threshold, which may be a vacuum pressure of approximately 100-200 torr. The determination as to whether or not the pressure is below the threshold value is made in step 102.

Once the purge of ambient air is complete, the method proceeds to step 103, in which the process gas is introduced into the manufacturing space 20. This is achieved by setting the first valve 26A to connect the first conduit 30A to the second conduit 30B (i.e. setting the first valve to position I). The pump 25 is then actuated to pump the process gas from the gas source 28 into the manufacturing space 20.

It will be understood that in some embodiments, the ambient air is not pumped from the manufacturing space before the introduction of the process gas, so steps 101 and 102 may be omitted. Instead, a large volume of process gas may be introduced into the manufacturing space, causing a dilution of the ambient air that may be sufficient to reduce the oxygen concentration to an acceptable value.

Pumping of the process gas into the manufacturing space 20 continues until it is determined in steps 104 and 105 that the signals from the pressure sensor 24 and the oxygen sensor 22 indicate that pressure and the oxygen concentration are both within the specified ranges.

Once the pressure and oxygen concentration are within the specified ranges, the method proceeds to step 106. In step 106, manufacturing of the three-dimensional component begins.

In some embodiments, especially if the detected oxygen concentration is determined to be significantly above the specified range in step 104, the method may return to step 101 rather than step 103 following a negative determination in step 104. This may reduce the overall amount of process gas required to achieve an oxygen concentration within the specified range.

The manufacture of the component may be performed by selective laser melting (SLM), or any other appropriate additive manufacture (AM) technique.

The method then proceeds to step 107, in which the controller determines whether or not the component is complete.

If the component is complete, then the method ends.

If the component is not complete, then the method proceeds to step 108, in which the controller determines whether the oxygen concentration within the manufacturing space is within the specified limits.

If the oxygen concentration is within the specified limits, then no action is taken, and the method returns to step 106. Manufacturing of the component continues until the component is finished or an oxygen concentration outside the specified limits is detected.

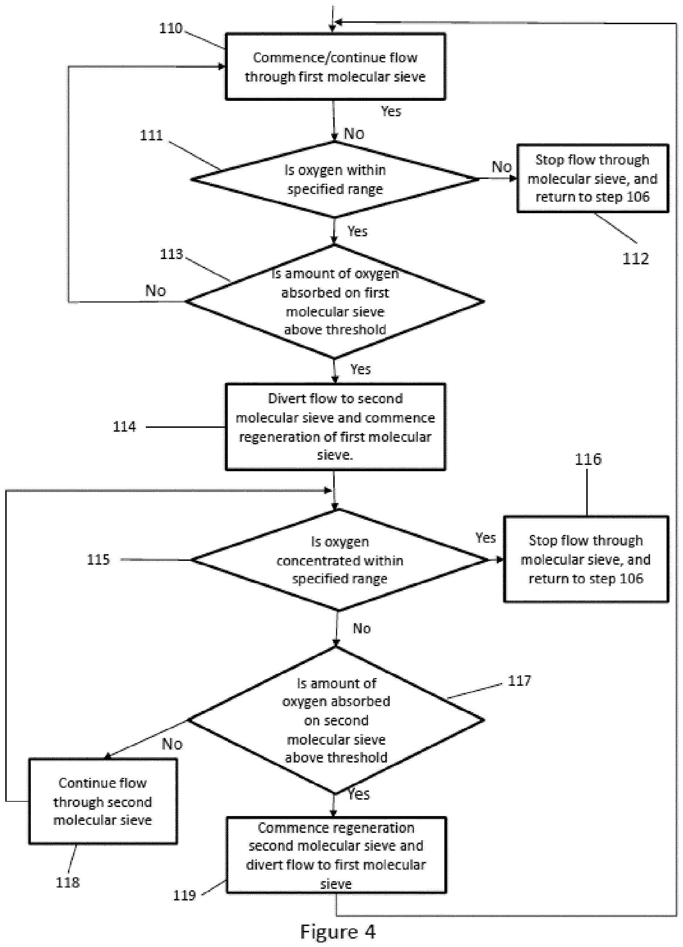

If an oxygen concentration outside the specified limit is detected then the method proceed to step 109, in which the procedure for removing oxygen from the manufacturing space 20 is commenced. This procedure is shown in more detail in figure 4.

It will be understood that ingress of oxygen during manufacture may occur during the process, for example due to imperfect seals around the manufacturing space 20, or oxygen being trapped within the powder itself.

Moving on to figure 4, the procedure for removing oxygen from the manufacturing space starts at step 110.

In step 110, the controller is arranged to cause the gas within the manufacturing space to flow through the first molecular sieve 29A and subsequently return to the manufacturing space 20. This is achieved by connecting the second conduit 30B to the fourth conduit 30D (via the third conduit 30C), and connecting the fourth conduit to the inlet of the manufacturing space 20. Accordingly, the first valve 26A is set to position II, the second valve 26B is set to position I, and the fourth valve 26D is set to position I. The pump 25 is then actuated to cause gas from the manufacturing space to flow through the molecular sieve 29A in the fourth conduit, and subsequently return to the manufacturing space.

As the gas from the manufacturing space flows through the molecular sieve 29A, oxygen contained in the gas are adsorbed onto the surface of the molecular sieve. The oxygen concentration within the manufacturing space is therefore reduced.

The method proceeds to step 111, in which it is determined whether or not the oxygen concentration is now in the specified range.

If the oxygen concentration is within the specified range, then the method proceeds to step 112, in which the flow through the molecular sieve is stopped. The method then returns to step 106.

If the oxygen concentration is not within the specified range, then the method proceeds to step 113.

In step 113, it is determined whether or not the amount of oxygen adsorbed on the first molecular sieve exceeds the threshold. If the threshold is not exceeded, then the method returns to step 110, and flow through the first molecular sieve continues.

Determining whether or not the amount of adsorbed oxygen exceeds the threshold value may be performed simply by determining whether or not the gas from the manufacturing space has been flowing through the first molecular sieve 29A for more than a predetermined time threshold. Alternatively, the control unit 21 may monitor the reduction in oxygen concentration due to the flow through the first molecular sieve, and calculate an approximate mass of oxygen adsorbed onto the first molecular sieve 29A based on the change in oxygen concentration.

If the threshold is exceeded, then the method proceeds to step 114, in which flow is diverted from the first molecular sieve to the second molecular sieve.

While gas from the manufacturing space is passed through the second molecular sieve 29B, the first molecular sieve 29A is regenerated. To regenerate the first molecular sieve 29A, the fourth valve 26D is set to connect the fourth conduit to an exhaust conduit (i.e. the fourth valve is set to position II), and the heating element associated with the first molecular sieve is actuated. This causes the adsorbed oxygen on the surfaces of the molecular sieve to dissociate from the molecular sieve and flow out through the exhaust conduit.

Next, the method proceeds to step 115, in which it is again checked whether or not the oxygen concentration within the manufacturing space is within the specified limits.

If the oxygen concentration is within the specified limits, then the method proceeds to step 116, in which the flow through the molecular sieve is stopped. The method then returns to step 106.

If the oxygen concentration is not within the specified limits, then the method proceeds to step 117, in which the controller determines whether or not the amount of oxygen adsorbed on the second molecular sieve is above the threshold limit. The determination as to whether or not the amount of adsorbed oxygen is above a threshold limit is made in a similar manner for the first and second molecular sieves. However, it will be understood that the threshold may be lower for the second molecular sieve than the first molecular sieve. Indeed, it is only necessary for the second molecular sieve to have sufficient capacity to operate during the regeneration of the first molecular sieve. The second molecular sieve may therefore be smaller than the first molecular sieve.

If it is determined that the amount of oxygen adsorbed on the second molecular sieve is less than the threshold value, then the method proceeds to step 118, in which flow through the second molecular sieve is continued. The method then returns to step 115. If it is determined that the amount of oxygen adsorbed on the second molecular sieve is less than the threshold value, then the method proceeds to step 119, in which flow is diverted to the first molecular sieve so that regeneration of the second molecular sieve can occur. The method then returns to step 110.

In some embodiments, it may not be necessary to provide two separate molecular sieves. Instead, a single molecular sieve or other adsorbent section may be provided. In this case, the molecular sieve or other adsorbent section must have sufficient capacity to adsorb substantially all of the oxygen that might enter the manufacturing space during a given build.

The present invention has been described with respect to an embodiment in which the oxygen concentration within the manufacturing space is controlled. However, it will be understood that the invention is also applicable to control the concentrations of other reactive gases, in addition to or instead of oxygen. Such control may be performed in a substantially similar way to the control of oxygen described above, provided the reactive gas to be controlled can be adsorbed onto a molecular sieve or other suitable adsorbent portion.

Within the present application, the term "reactive gas" will be understood to mean a gas that may react with the feed material during an additive manufacture process. For example, the feed material may be the metal powder or wire from which a three-dimensional part is to be made.

### List of Reference Numbers

- 1: device for additive manufacturing
- 2: production cylinder
- 3: delivery cylinder
- 4: heat source
- 5: housing
- 6: wall
- 7: powder delivery piston
- 8: powder applying device
- 9: housing
- 10: wall
- 11: lift table
- 12: built platform
- 13: build space
- 17: processing chamber
- 20: manufacturing space
- 21: control unit
- 22: oxygen sensor
- 23: nitrogen sensor
- 24: pressure sensor
- 25: pump
- 26A-D: valves
- 28: process gas source
- 29A, B: molecular sieves
- 30A-E: conduits
- 40: apparatus for additive manufacture

## Claims

1. Apparatus for controlling a gas environment in an manufacturing space during an additive manufacturing process, the apparatus comprising:
a device for feeding a process gas to the manufacturing space;
an reactive gas sensor for detecting a concentration of a reactive gas within the manufacturing space;
an adsorbent portion arranged to adsorb the reactive gas from a flow of gas through the adsorbent portion;
a pump arranged to cause gas from the manufacturing space to flow through the adsorbent portion and subsequently return to the manufacturing space; and
a control unit arranged to receive signals from the reactive gas sensor and to control the operation of the pump,
wherein the control unit is configured to activate the pump if the reactive gas sensor detects a reactive gas concentration greater than a predetermined threshold value.

2. Apparatus as claimed in claim 1, wherein the reactive gas is oxygen and wherein the reactive gas sensor is an oxygen sensor.

3. Apparatus as claimed in claim 1, wherein the process gas comprises Argon.

4. Apparatus as claimed in claim 1, claim 2 or claim 3, wherein the adsorbent portion comprises a molecular sieve arranged to adsorb the reactive gas from a flow of gas through the molecular sieve.

5. Apparatus as claimed in any one of claims 1 to 4, wherein the adsorbent portion is a first adsorbent portion, and the apparatus further comprises a second adsorbent portion and a valve means arranged to selectively direct a gas flow from the manufacturing space to one of the first and second adsorbent portions.

6. Apparatus as claimed in claim 5, wherein the control means is arranged to control the valve means.

7. Apparatus as claimed in claim 5, wherein the control means is operable to control the valve means to divert the gas flow from the first adsorbent portion to the second adsorbent portion in response to a determination that the amount of the reactive gas adsorbed on the first adsorbent portion exceeds a threshold value.

8. Apparatus for additive manufacture comprising an apparatus as claimed in any preceding claim, and further comprising:
a delivery system comprising a storage unit for metal feed material and an application device for applying the metal feed material onto a built platform;
a heat source which is a device for generating a plasma or an arc or laser radiation for melting the metal feed material; and a
production unit for additive manufacturing comprising:
a housing with a wall;
a built platform disposed inside the wall of the housing, wherein the wall of the housing and the built platform define a manufacturing space.

9. Apparatus as claimed in claim 8, wherein the feed material is a metal powder or wherein wherein the feed material comprises metal wire.

10. Apparatus as claimed in claim 8, wherein the feed material is a powder of titanium or a titanium alloy.

11. Method for controlling a gas environment in an manufacturing space during an additive manufacturing process comprising the following steps:
supplying a process gas to the manufacturing space;
detecting a concentration of a reactive gas in the manufacturing space, and determining whether or not the reactive gas concentration exceeds a predetermined threshold value; and
if the detected reactive gas concentration exceeds the threshold value, controlling a pump to cause gas from the build environment to flow through an adsorbent portion arranged to remove the reactive gas by adsorption.

12. Method as claimed in claim 11, wherein the reactive gas comprises oxygen.

13. Method as claimed in claim 11 or claim 12, wherein the process gas comprises Argon.

14. Method as claimed in any one of claims 11 to 13, wherein the additive manufacturing process comprises a selective laser melting (SLM) process or a wire arc additive manufacture (WAAM) process.

15. Method as claimed in any one of claims 11 to 14, wherein the adsorbent portion comprises a molecular sieve arranged to adsorb the reactive gas from a flow of gas through the molecular sieve.
